# EUROPÄISCHE PATENTSCHRIFT

(11) **EP 0 559 147 B1**
(45) Veröffentlichungstag und Bekanntmachung des Hinweises auf die Patenterteilung: **25.09.1996**
(21) Anmeldenummer: 93103305.4
(22) Anmeldetag: 02.03.1993
(51) Int. Cl.: G02B 6/42

(54) **Lichtwellenleiter-Signal-Detektor**
Lightguide-signal-detector
Détecteur de signal en guide d'onde

(30) Priorität: 04.03.1992 DE 4206814
(43) Veröffentlichungstag der Anmeldung: 08.09.1993
(73) Patentinhaber: SIEMENS AKTIENGESELLSCHAFT, 80333 München (DE)
(72) Erfinder: Finzel, Lothar, Dipl.-Ing., W-8044 Unterschleissheim (DE)

(56) Entgegenhaltungen:
- WO-A-92/01961
- DE-A- 3 537 342
- US-A- 4 671 653
- US-A- 4 950 046

## Beschreibung

Die Erfindung betrifft einen Lichtwellenleiter-Signal-Detektor mit dem das Vorhandensein von Lichtsignalen im Lichtwellenleiter nachgewiesen werden kann.

Es ist ein Activ-Fiber-Detektor der Firma BIT Instruments Ltd., Clifton Technology Centre, Clifton Moor Gate, York YO3 8XF, U.K. bekannt, der nach dem Prinzip der Lichtauskopplung durch Faserausbiegung arbeitet. Bei diesen Geräten wird aber soviel Licht ausgekoppelt, daß der Datenaustausch während des Prüfens gestört wird. Je nach Biegeempfindlichkeit des Lichtwellenleiters koppeln diese Geräte unterschiedlich viel Licht aus. Außerdem wird die Lichtwellenleiterfaser durch den relativ kleinen Biegeradius stark beansprucht.

Ein Lichtwellenleiter-Signal-Detektor ist auch aus US-A-4,983,007 bekannt. Bei diesem Gerät wird das ausgekoppelte Licht durch einen gekrümmten Stab, der auch als Grundteil dient, zu einem Lichtempfänger geleitet.

Aufgabe der Erfindung ist es, einen Lichtwellenleiter-Signal-Detektor anzugeben, durch den die Lichtwellenleiterfaser mechanisch wenig beansprucht wird und das ausgekoppelte Licht auf die minimal benötigte Menge begrenzt ist, so daß die Signalübertragung nicht gestört wird.

Diese Aufgabe wird durch einen Lichtwellenleiter-Signal-Detektor nach Anspruch 1 gelöst. Vorteilhafte Weiterbildungen der Erfindung sind in den Unteransprüchen angegeben.

Vorteilhaft ist die Durchbiegung des Lichtwellenleiters auf einem elastischem Material. Hierdurch wird die mechanische Beanspruchung minimiert, so daß die Faser nicht zu starkem Druck ausgesetzt wird. Außerdem muß nur das unelastische Andruckteil ausgetauscht werden, um unterschiedliche Biegeradien zu erzielen, um Fasern mit unterschiedlicher Biegeempfindlichkeit zu überprüfen. Es wird stets nur soviel Licht ausgekoppelt, wie zur Erkennung des Betriebs notwendig ist. Der Betrieb wird hierbei nicht unterbrochen.

Das unelastische Andruckteil gibt jeweils den minimalen Biegeradius vor, während sich das elastische Material anpaßt. Durch die elastische undurchsichtige Lichtabdeckung wird ein ungewollter Lichteinfall vermieden, so daß bei einem großen Störabstand mit minimalen ausgekoppelten Lichtmengen gearbeitet werden kann.

Die Erfindung wird anhand von Prinzipschaltbildern und eines Ausführungsbeispiels näher erläutert.

Es Zeigen
- Fig. 1: ein Prinzipschaltbild des Lichtwellenleiter-Signal-Detektors,
- Fig. 2: eine spezielle Ausführungsform des Lichtwellenleiter-Signal-Detektors, und
- Fig. 3: ein Ausführungsbeispiel des Lichtwellenleiter-Signal-Detektors.

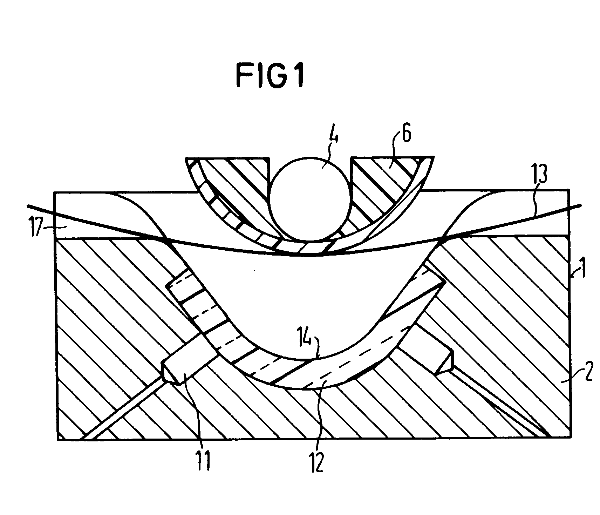

Das in Figur 1 dargestellte Prinzipschaltbild eines Lichtwellenleiters (LWL-Signal-Detektors) 1 zeigt ein Grundteil 2, das eine Nut aufweist, die mit einem durchsichtigen elastischen Material 12 ausgekleidet ist. Hierfür ist beispielsweise transparentes Silikon geeignet. Unterhalb des elastischen Materials sind zwei lichtempfindliche optoelektronische Wandler, die Lichtempfänger 11, angeordnet. In die durch das Silikon geformte Mulde wird ein Biegeteil 4, daß zumindest teilweise von einer elastischen Lichtabdekkung 6 umgeben ist, hineingedrückt. Das Biegeteil 4 ist zumindest auf einer Seite verrundet, so daß eine zwischen dem Grundteil und dem Biegeteil befindliche LWL-Faser 13 den Biegeradius des Andruckteils 4 annimmt. Den Fasereigenschaften entsprechend können Andruckteile mit verschiedenen Biegeradien verwendet werden. Ebenso kann ein Andruckteil verwendet werden, das mehrere unterschiedliche Biegeradien aufweist. In der Praxis sind stets 2 bis 3 unterschiedliche Biegeradien ausreichend.

Sobald die LWL-Faser 13 in die Andruckmulde 14 hineingedrückt wird, wird durch die Lichtabdeckung ein störender Lichteinfall für die Signalempfänger verhindert. Um seitlich einfallendes Streulicht zu vermeiden (in Fig. 1 von vorn oder hinten kommend), wird die Nut an ihrer vorderen und hinteren Öffnung ebenfalls abgedeckt.

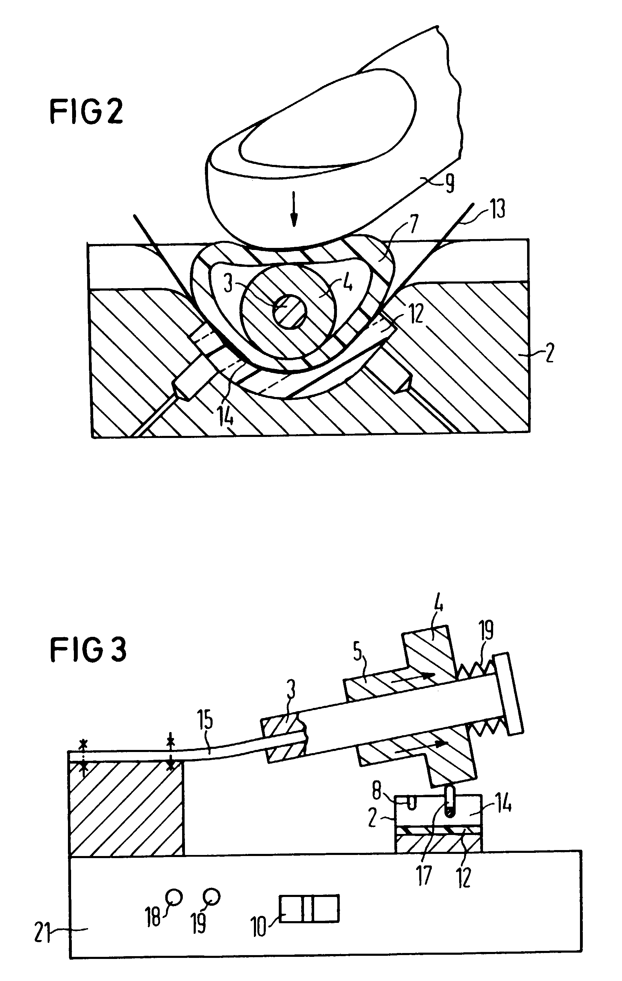

In Figur 2 ist eine spezielle Ausführungsform des LWL-Signals-Detektors dargestellt. Als Lichtabdeckung ist ein Schlauch 7 vorgesehen, der das hier zylindrisch ausgeführte Andruckteil 4 umgibt. Das Anpressen erfolgt durch eine Fingerkuppe 9, die gleichzeitig den Schlauch so verformt, daß das elastische Material 12 vollständig gegen den Lichteinfall abgeschirmt wird. Ein Führungsteil 3 sorgt für die exakte Anpassung des Andruckteils in das Grundteil.

In Figur 3 ist ein Ausführungsbeispiel des LWL-Faser-Detektors dargestellt. In dem Gehäuse 21 ist ein Betriebschalter 10, eine Betriebsanzeige 18 und eine Signalanzeige 19 sowie die erforderliche elektronische Schaltung untergebracht. Das Andruckteil 4 ist hier auf einem Führungsteil 3 verschiebbar angeordnet, so daß wahlweise mit einem großen Biegeradius oder - bei Einsatz der kleinen Biegehülse 5 durch Verschieben des Andruckteils - mit einem kleinen Biegeradius geprüft werden kann. Durch eine Rückholfeder 19 wird sichergestellt, daß die Prüfung stets mit dem größeren Biegeradius beginnt. Das Führungsteil 3 ist über eine Blattfeder 15 mit dem Grundteil verbunden, wodurch seitliche Bewegungen verhindert werden. Als Alternative zu einem verschiebbaren (oder auch drehbaren) Andruckteil 4 können weitere Schlitze im Grundteil 2 vorgesehen werden, denen unterschiedliche Biegeradien des Andruckteils zugeordnet sind.

Die Bewegungsrichtung des Andruckteils kann natürlich auch wie beim angegebenen Stand der Technik linear erfolgen.

## Patentansprüche

1. Lichtwellenleiter-Signal-Detektor,
der
a) ein Grundteil (2) aufweist, das eine mit einem lichtdurchlässigen elastischen Material (12) ausgekleidete Andruckmulde (14) besitzt,
b) mindestens einen Lichtempfänger (11) aufweist, der auf der dem Grundteil zugewandten Seite des elastischen Materials (12) angeordnet ist,
c) ein in die Andruckmulde (14) passendes umelastisches Andruckteil (4) aufweist, das zumindest auf einer Seite abgerundet ist, und
d) eine elastische Lichtabdeckung (6) aufweist, die zumindest den der Andruckmulde (14) zugewandten Teil des Andruckteils (4) umfaßt so daß eine zwischen der Lichtabdeckung (6) und dem elastischen Material (12) verlaufende Lichtwellenleiter-Faser (13) gegen äußeres Licht abgeschirmt wird.

2. LWL-Signal-Detektor nach Anspruch 1,
wobei das Grundteil (2) eine stumpfwinklige V-Nut aufweist.

3. LWL-Signal-Detektor nach Anspruch 1 oder 2,
wobei als elastisches Material (12) transparentes Silikon vorgesehen ist.

4. LWL-Signal-Detektor nach einem der vorhergehenden Ansprüche,
wobei die abgerundete Seite des Andruckteils (4) unterschiedliche Radien aufweist.

5. LWL-Signal-Detektor nach einem der vorhergehenden Ansprüche,
wobei als Lichtabdeckung ein Schlauch (7) vorgesehen ist.

6. LWL-Signal-Detektor nach einem der Ansprüche 2-5, wobei
mindestens ein Schlitz (17) zur Führung einer Lichtwellenleiter-Faser (13) quer zur Längsrichtung der V-Nut vorgesehen ist.

## Claims

1. Optical waveguide signal detector, which has
a) a base part (2) which has a pressure trough (14) lined with a transparent elastic material (12),
b) at least one light receiver (11), which is arranged on that side of the elastic material (12) facing the base part,
c) an inelastic pressure part (4), which fits into the pressure trough (14) and is rounded on at least one side, and
d) an elastic light cover (6), which encloses at least that part of the pressure part (4) which faces the pressure trough (14), with the result that an optical fibre (13) running between the light cover (6) and the elastic material (12) is shielded from external light.

2. Optical waveguide signal detector according to Claim 1, the base part (2) having an obtuse-angled V-groove.

3. Optical waveguide signal detector according to Claim 1 or 2, transparent silicon being provided as elastic material (12).

4. Optical waveguide signal detector according to one of the preceding claims, the rounded side of the pressure part (4) having different radii.

5. Optical waveguide signal detector according to one of the preceding claims, a tube (7) being provided as light cover.

6. Optical waveguide signal detector according to one of Claims 2 - 5, at least one slot (17) being provided for guiding an optical fibre (13) transverse to the longitudinal direction of the V-groove.

## Revendications

1. Détecteur de signaux de guide d'ondes lumineuses, qui
a) comporte une partie (2) de base, qui comprend une cuvette (14) de réception d'une pression, revêtue d'un matériau (12) élastique transparent,
b) comporte au moins un récepteur (11) de lumière, qui est disposé du côté, tourné vers la partie de base, du matériau élastique (12),
c) comporte une partie (4) d'application d'une pression non élastique adaptée à la cuvette (14) de réception d'une pression et arrondie au moins d'un côté, et
d) comporte un écran (6) élastique contre la lumière, qui comprend au moins la partie, tournée vers la cuvette (14) de réception d'une pression, de la partie (4) d'application d'une pression, de manière à protéger de la lumière extérieure une fibre (13) de guidage d'ondes lumineuses s'étendant entre l'écran (6) et le matériau élastique (12).

2. Détecteur de signaux de guide d'ondes lumineuses suivant la revendication 1,
dans lequel la partie (2) de base comporte une rainure en V à angle obtus.

3. Détecteur de signaux de guide d'ondes lumineuses suivant la revendication 1 ou 2,
dans lequel il est prévu, comme matériau (12) élastique, du silicone transparent.

4. Détecteur de signaux de guide d'ondes lumineuses suivant l'une des revendications précédentes,
dans lequel le côté arrondi de la partie (4) d'application d'une pression a différents rayons.

5. Détecteur de signaux de guide d'ondes lumineuses suivant l'une des revendications précédentes,
dans lequel il est prévu, comme écran contre la lumière, un tuyau flexible (7).

6. Détecteur de signaux de guide d'ondes lumineuses suivant l'une des revendications 2 à 5,
dans lequel il est prévu au moins une rainure (17) pour le guidage d'une fibre (13) de guide d'ondes lumineuses transversalement à la direction longitudinale de la rainure en V.
